# EUROPÄISCHE PATENTSCHRIFT

(11) **EP 1 962 388 B1**
(45) Veröffentlichungstag und Bekanntmachung des Hinweises auf die Patenterteilung: **10.04.2013**
(21) Anmeldenummer: 08003015.8
(22) Anmeldetag: 19.02.2008
(51) Int. Cl.: H02G 3/14, H01R 13/514, H01R 13/516, H01R 25/00

(54) **Rahmen für elektrische Schalter und Steckdosen**
Frame for electric switches and plug sockets
Cadre pour interrupteurs et prises de courant

(30) Priorität: 20.02.2007 DE 102007008665
(43) Veröffentlichungstag der Anmeldung: 27.08.2008
(73) Patentinhaber: Schmidt, Ulrich, 63571 Gelnhausen (DE)
(72) Erfinder: Schmidt, Ulrich, 63571 Gelnhausen (DE)
(74) Vertreter: Erb, Henning

(56) Entgegenhaltungen:
- EP-A1- 1 039 608
- DE-A1- 4 440 228
- DE-A1- 10 251 852
- DE-U1- 20 305 756

## Beschreibung

Die Erfindung betrifft einen Rahmen für eine Mehrzahl von senkrecht oder waagerecht nebeneinander angeordneten, äußeren Einsätzen, wie elektrischen Schaltern und/oder Steckdosen, die mit in Wanddosen installierten, jeweils mit einem Installationsblech verbundenen inneren elektrischen Einsätzen mechanisch zu verbinden sind, wobei ein bestimmter Mittenabstand der äußeren Einsätze durch die auf Anschlag montierten Wanddosen und/oder Installationsbleche vorgegeben ist und der Rahmen aus zwei oder mehr Einzelrahmen sowie mindestens einem mit diesen formschlüssig in Eingriff zu bringenden Zwischenstück und Endstücken zusammensetzbar ist, und wobei die Einzelrahmen zur gegenseitigen Verbindung an gegenüberliegenden Randkanten mit formschlüssig in Eingriff zu bringenden Einbuchtungen und Vorsprüngen ausgebildet sind, die auf die endseitigen Randkanten aufsetzbaren Endstücke die endseitigen Einbuchtungen und Vorsprünge abdecken und durch die auf aneinander grenzende Randbereiche benachbarter Einzelrahmen aufsetzbaren Zwischenstücke die in Eingriff gebrachten Einbuchtungen und Vorsprünge in der Eingriffsstellung verriegelbar sind.

Das Problem, vor dem jeder Hersteller eines Flächenrahmenprogramms für elektrische Einsätze, wie z.B. Schalter, Steckdosen, Dosen für TV/Radio, Telefon, Netzwerkanschlüsse usw., steht, sind die sehr hohen Kosten für die Herstellung der Rahmen für eine Mehrzahl von Einsätzen. Innerhalb desselben Rahmenprogramms muß für jeden Rahmentyp für eine bestimmte Anzahl von Einsätzen eine spezielle Konstruktion und ein entsprechendes Spritzgußwerkzeug hergestellt werden. Besonders dann, wenn Rahmen für mehr als drei Einsätze gefordert sind, ist man auf verhältnismäßig große Werkzeuge angewiesen und muß die entsprechend hohen Investitionskosten in Kauf nehmen.

Leider verbieten es die Verhältnisse, einen langen Rahmen einfach nur durch aneinandergesetzte oder miteinander zu verbindende Einzelrahmen zu ersetzen. Dies liegt daran, dass die Wanddosen, welche die inneren elektrischen Einsätze aufnehmen, und die mit diesen verbundenen Installationsbleche auf gegenseitigen Anschlag, also unmittelbar gegeneinander stoßend, montiert werden. Die normalerweise achteckigen Installationsbleche haben ein bestimmtes Quermaß und müssen bei der Montage eines einzelnen Schalters oder einer einzelnen Steckdose von einem Einzelrahmen allseitig überdeckt werden, so dass nach der Montage der äußere Rand des Rahmens neben dem Installationsblech auf der Wand aufliegt. Es leuchtet unmittelbar ein, dass man nicht mehrere solcher Einzelrahmen, die in ihrer Länge und Breite größer sind als die Installationsbleche, mit demselben Mittenabstand montieren kann wie eine Reihe unmittelbar aneinanderstoßender Installationsbleche.

Um trotz der genannten Schwierigkeiten einen Rahmen der eingangs genannten Art für eine Mehrzahl von Schaltern, Steckdosen und dergleichen zu erhalten, der sich kostengünstig herstellen läßt und in jeder Länge mit seinen Aufnahmen für die äußeren Einsätze zu dem vorgegebenen Mittenabstand der überdeckten Installationsbleche paßt und deren Außenkanten zuverlässig überdeckt, ist es aus der DE 102 51 852 A1 bekannt, den Rahmen aus zwei oder mehr Einzelrahmen sowie mindestens einem mit diesen formschlüssig in Eingriff zu bringenden Zwischenstück und Endstücken zusammenzusetzen. Dies geschieht in der Weise, dass die Zwischenstücke die aneinander anliegenden Randkanten benachbarter Einzelrahmen miteinander verklammern und die Fuge zwischen den Einzelrahmen überdecken. Die Endstücke dienen dazu, die freien Endkanten der äußersten einer Reihe von Einzelrahmen zu überdecken. Nachteilig ist, dass alle Belastungen des Rahmens während des Gebrauchs und bei Reparaturen von einem Einzelrahmen auf einen angrenzenden Einzelrahmen über das sie verbindende Zwischenstück übertragen werden. Dabei können die kleinen Zwischenstücke überlastet und zerstört werden. Außerdem ist die Steifigkeit der Verbindungen gegen Biegung des zusammengesetzten Rahmens verhältnismäßig gering.

Aus der DE 203 05 756 U1 ist weiterhin ein aus Einzelrahmen und Endstücken zusammenzusetzender Rahmen bekannt, bei dem jeweils zwei miteinander zu verbindende Einzelrahmen zunächst über sich in Richtung der Aneinanderreihung erstreckende Zentrierzapfen und passende Zentrieröffnungen in einer relativ zu einander verdrehten Stellung drehbar zusammengesteckt, dann in eine fluchtende Stellung gedreht, dabei mit zu einander passenden Rastvorsprüngen und -öffnungen in Eingriff gebracht und schließlich in dieser Eingriffsstellung durch ein Zwischenstück in Form einer Metallklammer verriegelt werden. Es ist jedoch festzustellen, dass ein aus zwei Halbzapfen mit jeweils halbkreisförmiger Kontur gebildeter Zentrierzapfen keine Relativbewegung der beiden Einzelrahmen erlaubt. Abgesehen davon, ist die mechanische Montage einer Steck- und Drehverbindung verhältnismäßig kompliziert und schwierig. Sie setzt entsprechende Rastvorsprünge und -öffnungen an bzw. in den schmalen Seitenflächen der Einzelrahmen voraus, die sich nur mit aufwendigen Spritzgußformen herstellen lassen. Schließlich sind die beiden in gegenseitigen Eingriff gebrachten Einzelrahmen durch rückseitig anzubringende Klammern aus Metall verriegelbar, die sich nur ansetzen und lösen lassen, wenn der zusammengesetzte Rahmen oder ein Einzelrahmen noch nicht oder nicht mehr auf einer Wand befestigt ist. Zur Abdeckung der Klammern aus Metall ist ein Blendrahmen vorgesehen, der alle vier Seiten eines Einzelrahmens überdeckt und entsprechende Kosten verursacht.

Der Erfindung liegt deshalb die Aufgabe zugrunde, einen Rahmen der eingangs genannten Art, der sich kostengünstig herstellen lässt, mit einer verbesserten Verbindung zwischen den Einzelrahmen zu schaffen.

Vorstehende Aufgabe wird erfindungsgemäß dadurch gelöst, dass die Einbuchtungen und Vorsprünge durch Relativbewegung der Einzelrahmen normal zu ihrer rückseitigen, an einer Wand anzulegenden Anlagefläche in Eingriff zu bringen sind und die Zwischenstücke von der Frontseite aus derart auf die aneinander grenzenden Randbereiche benachbarter Einzelrahmen aufzuklipsen sind, dass sie im montierten Zustand mit dem mittleren Bereich ihrer Länge an der Vorderseite und mit ihren Enden an der Rückseite der Einzelrahmen anliegen.

Der neue Rahmen hat den Vorzug, dass die Einzelrahmen durch die an ihnen angeformten Vorsprünge und dazu passenden Einbuchtungen unmittelbar miteinander in Eingriff stehen. Dementsprechend werden auch Zugkräfte unmittelbar von einem Einzelrahmen auf den nächsten übertragen. Die vorderseitig aufgesetzten Zwischenstücke haben die Funktion, die Einzelrahmen in ihrer Eingriffsstellung zu verriegeln und ggf. die Fuge zwischen den Einbuchtungen und Vorsprüngen zu überdecken.

Die Form der Einbuchtungen und Vorsprünge ist weitgehend variabel. Es muß lediglich die einfache Bedingung erfüllt sein, daß die Einbuchtungen und Vorsprünge an der einen Randkante der Einzelrahmen derart zu den Einbuchtungen und Vorsprüngen der gegenüberliegenden Randkante passen, daß sich die Randbereiche zweier Einzelrahmen in Längsrichtung des zusammengesetzten Rahmens spielfrei in Eingriff bringen lassen. Dies kann z. B. durch eine Relativbewegung normal zu ihrer Anlagefläche an der Wand erfolgen. Es besteht aber auch die Möglichkeit, die Eingänge der Einbuchtungen breiter zu machen als die freien Enden der Vorsprünge und nach einer Relativbewegung parallel zu der Anlagefläche an der Wand, bei der die Enden der Vorsprünge in die Einbuchtungen eingeführt werden, eine Querbewegung auszuführen, durch die Querfortsätze an den Vorsprüngen in genau passende Querfortsätze der Einbuchtungen eingeführt werden, so daß sich eine mit Bezug auf Kräfte in Längsrichtung des zusammengesetzten Rahmens spielfreie Kupplung zwischen den Einzelrahmen ergibt. Nach dem Aufsetzen und Aufklipsen der Zwischenstücke sind die Einzelrahmen in ihrer Eingriffsstellung verriegelt, so daß auch eine relative Querbewegung verhindert ist.

In bevorzugter Ausgestaltung der Erfindung sind die Zwischenstücke von der Frontseite aus derart auf die aneinander grenzenden Randbereiche benachbarter Einzelrahmen aufzuklipsen, daß sie im montieren Zustand mit dem mittleren Bereich ihrer Länge an der Vorderseite und mit ihren Enden an der Rückseite der Einzelrahmen anliegen. Da die Zwischenstücke eine größere Breite haben als die ineinander greifenden Randbereiche mit Einbuchtungen und Vorsprüngen und auf ihrer gesamten Breite die in Eingriff befindlichen Einzelrahmen an der Vorder- und Rückseite einspannen, erhält man eine verhältnismäßig bieqesteife Verbindung.

In weiterer bevorzugter Ausgestaltung der Erfindung sind die Einzelrahmen an den nicht mit Einbuchtungen und Vorsprüngen versehenen Rändern mit Randleisten geformt, deren Rückseite die an die Wand anzulegende Anlagefläche bildet und deren Vorderseite über eine Bodenfläche der Einzelrahmen übersteht. In einer ersten Variante dieser Ausführung schließt die Oberfläche der Zwischenstücke im montierten Zustand bündig an die Oberflächen der angrenzenden Randleisten an. Passend dazu können die äußeren Einsätze eine rechteckige Außenfläche haben, welche bündig sowohl an die Oberflächen der Randleisten der Einzelrahmen als auch an die Oberflächen der Zwischenstücke anschließt. In diesem Fall bedarf es keiner besonderen Maßnahmen, um die äußeren Einsätze drehfest zu halten. Die bündige Lage der Außenflächen der äußeren Einsätze und der Zwischenstücke wird zweckmäßigerweise dadurch gewährleistet, daß die Einzelrahmen neben den mit Einbuchtungen und Vorsprüngen versehenen Randbereichen vorderseitig mit Stegen geformt sind, auf denen im montierten Zustand die Zwischenstücke aufliegen.

In einer zweiten Variante sind die Einzelrahmen ebenfalls an den nicht mit Einbuchtungen und Vorsprüngen versehenen Rändern mit Randleisten geformt, deren Rückseite die an die Wand anzulegende Anlagefläche bildet, und deren Vorderseite über eine Bodenfläche der Einzelrahmen übersteht, aber in diesem Fall sind die Zwischenstücke zwischen den gegenüberliegenden Randleisten angeordnet und von den äußeren Einsätzen überdeckt. Die Front der fertig montierten Steckdosen und Schalter wird dann nur noch von den äußeren Einsätzen, den Randleisten und den Endstücken gebildet. Dabei können die äußeren Einsätze in ein Abdeckteil und ein Funktionsteil aufgeteilt sein. Diese beiden Teile können aus unterschiedlichen oder unterschiedlich gefärbten Kunststoffen hergestellt werden, so dass z. B. die Möglichkeit eröffnet wird, das Abdeckteil aus einem transluzenten Material zu formen und dahinter am inneren Einsatz eine oder mehrere Leuchtdioden zu installieren, die vorzugsweise derart umschaltbar sind, dass sie je nach der Einbausituation im Einzelfall nach Wunsch bestimmte Betriebs- oder Schaltzustände anzeigen.

Nachstehend werden einige Ausführungsbeispiele anhand der Zeichnung näher erläutert. Es zeigen:
- Fig. 1: eine perspektivische Ansicht eines aus drei Einzelrahmen zusammengesetzten Rahmens mit einem Schalter und zwei Steckdosen;
- Fig. 2: eine perspektivische Ansicht des Rahmens nach Fig. 1 nach Abnahme der Zwischen- und Endstücke;
- Fig. 3: eine perspektivische Ansicht des Rahmens nach Fig. 1 und 2 nach Abnahme auch noch der vorderen Einsätze;
- Fig. 4: den in Fig. 3 gezeigten Rahmen mit seinen zugehörigen Teilen in einer perspektivischen Ansicht von hinten;
- Fig. 5: eine perspektivische Ansicht von hinten von zwei miteinander verbundenen Einzelrahmen mit zwei montierten Zwischenstücken und einem Endstück, aber ohne äußere Einsätze;
- Fig. 6: eine perspektivische Ansicht von vorn eines Einzelrahmens;
- Fig. 7: eine perspektivische Ansicht der Rückseite des Einzelrahmens nach Fig. 6;
- Fig. 8: eine Seitenansicht des Einzelrahmens nach Fig. 6 und 7;
- Fig. 9: eine perspektivische Ansicht der Rückseite eines Zwischenstücks;
- Fig. 10: eine perspektivische Ansicht der Rückseite eines Endstücks;
- Fig. 11: eine Explosionsdarstellung der Teile eines aus zwei Einzelrahmen bestehenden Rahmens eines zweiten Ausführungsbeispiels der Erfindung;
- Fig. 12: eine perspektivische Ansicht des Rahmens nach Fig. 11 in einer ersten Phase der Installation;
- Fig. 13: eine perspektivische Ansicht des Rahmens nach Fig. 11 und 12 in einer zweiten Installationsphase nach dem Verriegeln der miteinander verbundenen Einzelrahmen;
- Fig. 14: eine perspektivische Ansicht des Rahmens nach Fig. 11 - 13 im fertig montierten Zustand.

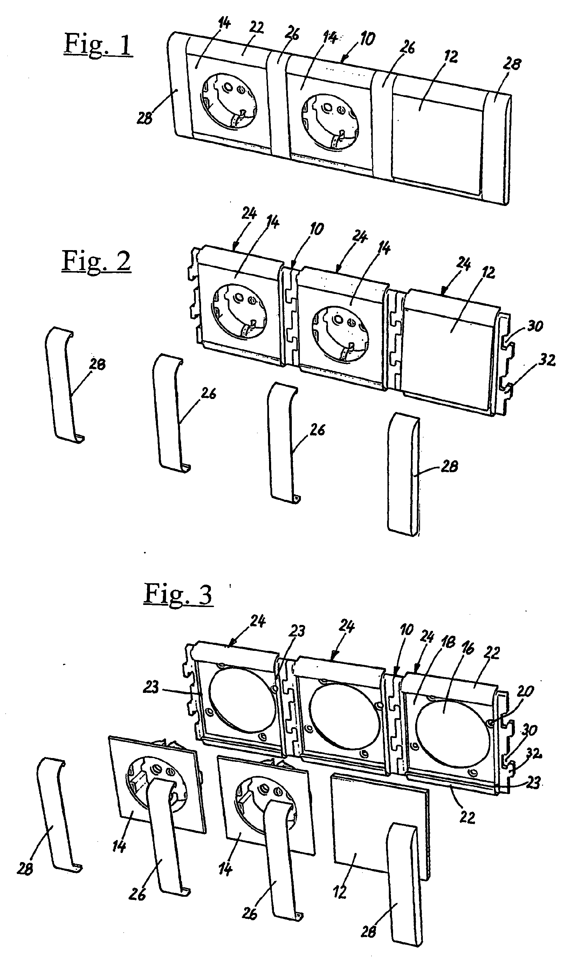

Der in Fig. 1 gezeigte erfindungsgemäße Rahmen 10 mit einem Schalter 12 und zwei Steckdosen 14 als äußeren Einsätzen wird in bekannter Weise an einer Wand über drei darin installierten Wanddosen angebracht, in denen ein innerer Schaltereinsatz und zwei innere Steckdoseneinsätze installiert sind, die jeweils fest mit einem achteckigen Installationsblech mit einer Breite und Länge von jeweils 70 mm verbunden sind. Da es sich bei den Wanddosen, den inneren Einsätzen und den Installationsblechen um bekannte Standard-Bauteile handelt, wird auf eine Darstellung verzichtet.

Auch die Montage des Rahmens 12 erfolgt in üblicher Weise. Er wird so auf die Wand aufgesetzt, daß er die Installationsbleche allseitig überdeckt, und dann werden die äußeren Einsätze 12 und 14 durch Verrasten bzw. Verschrauben mechanisch mit den fest in den Wanddosen sitzenden inneren Einsätzen verbunden. Der Rahmen 12 wird somit zwischen den inneren und den äußeren Einsätzen eingespannt und gehalten.

Die Vorderansicht des in Fig. 3 gezeigten, erfindungsgemäßen Rahmens 10 nach Abnahme der äußere Einsätze läßt weitere Details erkennen. Der Rahmen hat zur Aufnahme von vorderen Einsatzen drei rechteckige Einsenkungen mit jeweils einer zentralen Öffnung 16 in deren Boden 18. Der Boden ist mit vier gleichmäßi,g über den Umfang verteilten Schraubenlöchern 20 versehen. Die Einsenkungen sind jeweils von zwei gegenüberliegenden Randleisten 22 und zwei gegenüberliegenden Stegen 23 begrenzt. Durch ein oder mehrere der Schraubenlöcher 20 hindurch kann der Rahmen 10 mit einem oder mehreren der von ihm überdeckten Installationsbleche verschraubt werden. Die Randleisten 22 bilden Verdrehsichsrungen für die Schalter 12, Steckdosen 14 und sonstigen äußeren Einsätze. Außerdem dienen sie der Stabilisation einer Schalterachse.

Die Dreifach-Rahmen 10 nach Fig. 1 bis 4 sind aus Einzelrahmen 24, Zwischenstücken 26 und Endstücken 28 zusammengesetzt. Wie Fig. 3 zeigt, lassen sich aus diesen drei Elementen, wie dargestellt, komplette Einzelrahmen, Zweifach-Rahmen, Dreifach-Rahmen und generell beliebige Mehrfach-Rahmon zusammensetzen, und alle diese Rahmen können wahlweise für eine senkrechte oder horizontale Reihe von Schaltern und/oder Steckdosen verwendet werden. Dabei dienen die Zwischenstücke 26 als Verriegelungselemente der aneinandergereihten Einzelrahmen 24. Die Endstücke 28 werden jeweils nur an den beiden Enden der aneinandergereihten Einzelrahmen 24 angebracht. Auch bei einem Einzelschalter oder, einer einzelnen Steckdose wird der Rahmen durch zwei Endstücke 28 komplettiert.

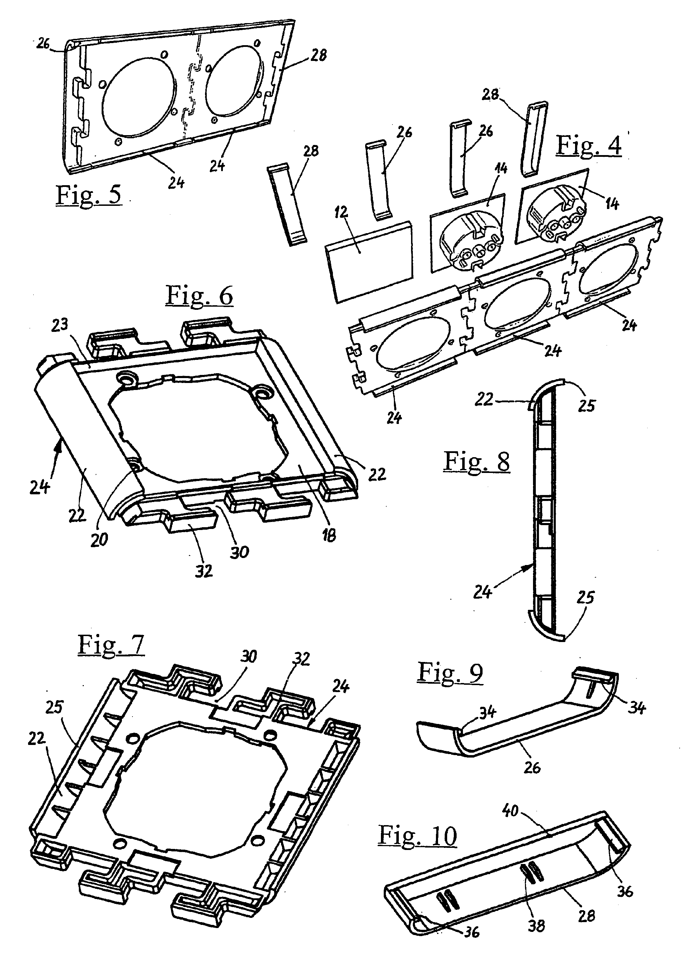

Die Fig. 6 und 7 zeigen, wie die Einzelrahmen 24 gestaltet sind, um mit den in Fig. 9 und 10 dargestellten Zwischen- und Endstücken 26 bzw. 28 zu der in den Fig. 1 bis 4 gezeigten Einheit eines erfindungsgemäßen Rahmens 10 verbunden werden zu können. Bei der in Fig. 1 bis 4 gezeigten waagerechten Anordnung der Einzelrahmen 24 haben diese eine Breite, die unter Berücksichtigung der gegenseitigen Überlappung der Einzelrahmen 24 der Länge und Breite eines Installationsblechs entspricht, und eine Höhe von etwa 75 mm, so daß bei der Positionierung des Rahmens über drei in horizontaler Reihe aneinander anliegenden Installationsblechen die Mitte des Überlappungsbereichs an der rechten und linken Randkante eines Einzelrahmens 24 jeweils genau auf der rechten bzw. linken Kante eines Installationsbleches liegt, während die Höhe der Einzelrahmen 24 merklich größer ist als die Höhe der Installationsbleche, so daß sie in dieser Ausdehnung vollständig abgedeckt werden.

Wie am besten aus Fig. 3 und 6 ersichtlich, sind die Einzelrahmen 24 an den aneinandergrenzenden Randkanten unmittelbar formschlüssig miteinander verbunden. Zu diesem Zweck hat jeder Einzelrahmen 24 jeweils außerhalb der beiden gegenüberliegenden Stege 23 einen mit Einbuchtungen 30 und Vorsprüngen 32 versehenen Randbereich. Im Beispielsfall haben diese Einbuchtungen und Vorsprünge in einer Vorder- oder Rückansicht im wesentlichen die Form eines "Z". Auf jeder der beiden gegenüberliegenden Seiten eines Einzelrahmens 24 sind jeweils zwei derartige Z-förmige Vorsprünge 32 vorhanden. Die freien Enden der Vorsprünge 32 zeigen auf beiden Seiten eines Einzelrahmens 24 jedoch in entgegengesetzte Richtungen, so daß bei Betrachtung des zusammengesetzten Rahmens 10 gemäß Fig. 3 die Z-förmigen Vorsprünge 32 auf der linken Seite eines Einzelrahmens 24 genau in die Z-förmigen Einbuchtungen im rechten Randbereich des links angrenzenden Einzelrahmens 24 passen. Gemäß Fig. 3 sind die beiden in Eingriff zu bringenden Randbereiche zweier benachbarter Einzelrahmen 24 mit derart bemessenen Einbuchtungen 30 und Vorsprüngen 32 geformt, daß die beiden zusammenwirkenden Randbereiche in der Eingriffsstellung, abgesehen von der Stoßfuge der Vorsprünge in den Einbuchtungen, eine durchgehend geschlossene Fläche bilden. Es versteht sich, daß die Einbuchtungen 30 und Vorsprünge 32, wie bei einem Puzzle, beliebige komplementäre Formen haben können, die ein verhakendes Ineinanderstecken erlauben, so daß sich die zusammengesetzten Einzelrahmen 24 nicht durch eine Zugkraft in Längsrichtung des Rahmens 10 voneinander trennen lassen. Die Z-förmigen Einbuchtungen 30 und Vorsprünge 32 werden durch eine Relativbewegung der Einzelrahmen 24 normal zu ihrer auf der Wand zur Anlage kommenden Anlagefläche 25 in Eingriff gebracht und demontiert. In der in Fig. 3 gezeigten Eingriffsstellung werden die miteinander verhakten Randbereiche der Einzelrahmen 24 durch die Zwischenstücke 26 verriegelt, die mit ihrer Breite genau zwischen die Randleisten 22 passen und nach dem Aufklipsen auf der Vorderseite des Rahmens 10 an den die Vorsprünge 32 vom Boden 18 trennenden Stegen 23 anliegen sowie gegebenenfalls zusätzlich an Erhebungen auf den Vorsprüngen 32, wie in Fig. 6 gezeigt. Beim Aufklipsen hintergreifen die Zwischenstücke 26 mit ihren gemäß Fig. 9 oberen und unteren hakenförmigen Enden 34 die mit ihren Vorsprüngen 32 in Eingriff befindlichen Randbereiche der Einzelrahmen 24 oben und unten. Diese Umklammerung und Einspannung der beiden zusammengesetzten, mit Vorsprüngen 32 versehenen und daher verhältnismäßig breiten Randbereiche gewährleistet eine gute Steifigkeit des Rahmens 10. Die Zwischenstücke 26 würden auch eine Relativverschiebung der Einzelrahmen 24 quer zur Längsrichtung des zusammengesetzten Rahmens 10 verhindern. Man könnte daher auch Vorsprünge 32 und im Vergleich dazu größere Einbuchtungen 30 verwenden, die quer zur Längsrichtung des Rahmens 10 mit Spiel zusammengesetzt sind, das sich aber infolge der Umklammerung durch die Zwischenstücke 26 nicht nachteilig auswirken kann.

An den Enden eines aus mehreren Einzelrahmen 24 zusammengesetzten Rahmens 10 befinden sich ebenfalls Randbereiche mit Einbuchtungen 30 und Vorsprüngen 32. Diese brauchen nur von den Endstücken 28 auf der Vorderseite und stirnseitig überdeckt zu werden. Die Endstücke 28 werden zu diesem Zweck ebenso wie die Zwischenstücke 26 auf die zu überdeckenden Randbereiche der Einzelrahmen 24 aufgeklipst und liegen dann ebenfalls mit hakenförmigen Enden 36 an der Rückseite der Einzelrahmen 24 an. Auf der Vorderseite des Rahmens liegen sie an dem neben dem überdeckten Randbereich angeordneten Steg 23 sowie mit kleinen inneren Vorsprüngen 38 an den Z-förmigen Vorsprüngen 32 an. Die Endstücke 28 sind an einer Stirnseite mit einer Endwand 40 geformt, welche die Vorsprünge 32 stirnseitig überdeckt.

Gemäß Fig. 3 und 6 begrenzen die Randleisten 22 und Stege 23 im Beispielsfall eine rechteckige oder quadratische Einsenkung, in welche an die äußeren Einsätze 12, 14 angeformte oder angebrachte rechteckige Frontplatten passend einsetzbar sind. Wegen des rechteckigen bzw. quadratischen Umrisses der Frontplatten und der Einsenkung bedarf es keiner Verdrehsicherung am Rahmen für die äußeren Einsätze. Wenn die Frontplatten der äußeren Einsätze 14 der Steckdosen auf dem Boden 18 der Einsenkungen aufliegen, liegt gemäß Fig. 1 die Vorderfläche der äußeren Einsätze sowohl bündig mit den Vorderkanten der Randleisten 22 als auch mit den Vorderflächen der Zwischenstücke 26 und Endstücke 28. Das Vorderteil des äußeren Einsatzes 12 eine Schalters dient als Wippe und braucht daher nicht bündig zu liegen mit den Vorderflächen der Zwischenstücke 26, Endstücke 28 sowie den festgelegten Frontflächen der äußeren Einsätze 14 der Steckdosen.

Wie die Fig. 4, 5 und 8 erkennen lassen, reichen die Randleisten 22 über die rückseitige Fläche des Bodens 18 und der Vorsprünge 32 hinaus nach hinten. Demnach bilden die hinteren Endflächen 25 der Randleisten 22 die Anlagefläche, mit welcher der zusammengesetzte Rahmen 10 an der Wand anliegt. Die hinteren Endkanten der Zwischenstücke 26 und der Endstücke 28 liegen im wesentlichen in derselben Ebene. Für eine feste Anlage an der Wand sorgen die Schraubverbindungen, welche durch die Löcher 20 hindurch den Rahmen 10 mit den von ihm überdeckten Installationsblechen verbinden, sowie Befestigungsschrauben zur Verbindung der äußeren Einsätze 12, 14 mit den jeweils zugehörigen, in Wanddosen installierten inneren Einsätzen.

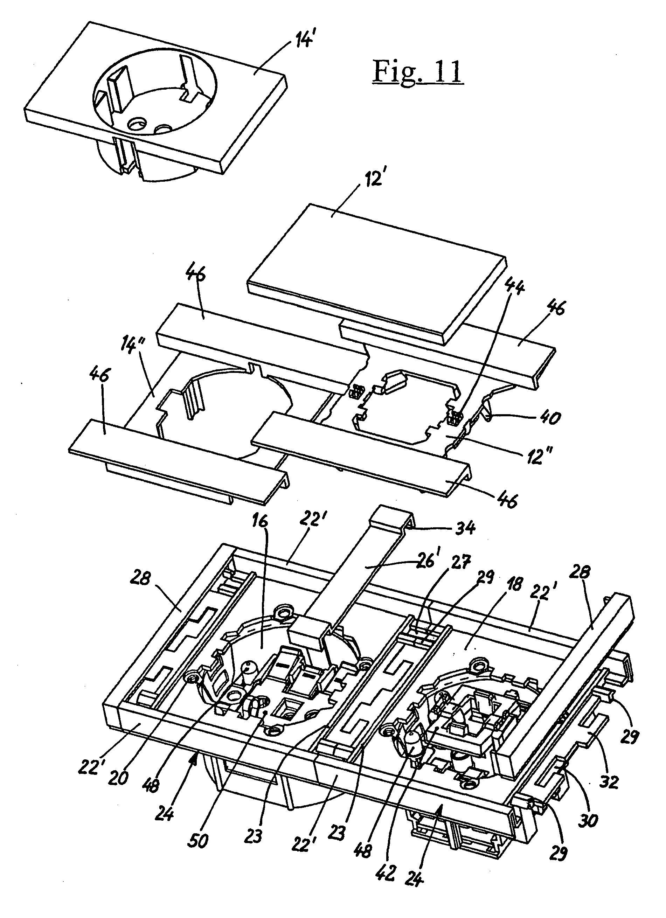

Das in Fig. 11 bis 14 gezeigte Ausführungsbeispiel stimmt weitgehend mit dem Ausführungsbeispiel nach Fig. 1 bis 10 überein. Es wurden deshalb zur Bezeichnung der übereinstimmenden Einzelteile dieselben Bezugszeichen verwendet, und es braucht nachfolgend nur auf die wesentlichen Unterschiede eingegangen zu werden.

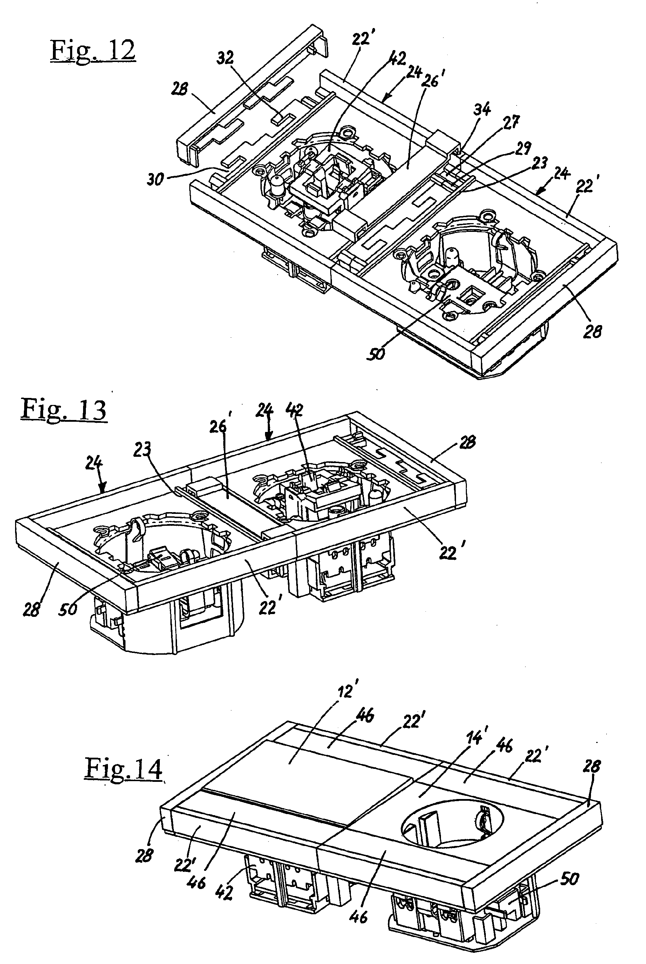

Bei der Variante nach Fig. 11 bis 14 sind die hier mit 22' bezeichneten Randleisten länger. Sie reichen bis zur Trennebene zwischen zwei aneinander grenzenden Einzelrahmen 24, so dass zwischen zwei benachbarten Randleisten nur noch eine minimale Fuge vorhanden ist. Die mit 26' bezeichneten Zwischenstücke erstrecken sich nicht bis zwischen die Randleisten, sondern sind kürzer, so dass sie innerhalb des von den Randleisten 22' umgrenzten Raums bleiben. Da die Zwischenstücke 26' auch hier die Funktion haben, die formschlüssige Verbindung der Einzelrahmen 24 an den Vorsprüngen 32 zu verriegeln, greifen nunmehr die hakenförmigen Enden 34 der Zwischenstücke 26' nicht mehr um die äußeren Randkanten der Einzelrahmen 24 herum, sondern gemäß Fig. 11 durch Löcher 27 hindurch auf die Rückseite der Einzelrahmen. Auf der äußeren Seite der Einzelrahmen Liegen die Zwischenstücke 26', in der Breite passend, zwischen den Stegen 23 an den miteinander verhakten Vorsprüngen 32 an. Damit die hakenförmigen Enden 34 der Zwischenstücke 26' nicht über die rückseitige Hauptebene der Einzelrahmen 24 vorstehen, sind die miteinander zu verhakenden Verbindungsbereiche der Einzelrahmen mit Rippen 29 geformt, deren freie Enden beim Zusammenfügen von zwei Einzelrahmen 24 zusammenstoßen, wie in Fig. 11 und 12 gezeigt. Die beiden aneinander grenzenden Rippen 29 begrenzen die beim Zusammenfügen gebildete Öffnung 27 und sind gemäß Fig. 11 rückseitig stufenförmig abgesetzt, so dass jeweils ein hakenförmiges Ende 34 eines Zwischenstückes 26' an der Rückseite der Rippen 29 eingehakt werden kann. Die Verhakung der Teile 29, 34 ist an beiden Enden der Zwischenstücke 26' in gleicher Weise ausgeführt.

Da die Zwischenstücke 26', abgesehen von den abgewinkelten, hakenförmigen Enden 34 bandförmig flach auf dem Fügebereich der Vorsprünge 32 aufliegen, können sie von außenseitig auf den Einzelrahmen 24 befestigten, äußeren Einsätzen überdeckt werden, so dass sie im fertig montierten Zustand gemäß Fig. 14 unsichtbar sind.

Die Rippen 29 an den seitlichen Enden eines aus Einzelrahmen 24 zusammengesetzten Rahmens dienen zum Einklipsen der die äußeren Vorsprünge 32 überdeckenden Endstücke 28.

Im zweiten Ausführungsbeispiel sind die äußeren Einsätze jeweils zweiteilig ausgebildet. Der mit 12' bezeichneten Schalterwippe ist ein Unterteil 12" zugeordnet und dem mit 14' bezeichneten Steckdoseneinsatz ein Unterteil 14". Das Unterteil 12" ist auf seiner Unterseite mit Klemmstiften 40 versehen, mit deren Hilfe es an dem unteren Schaltereinsatz 42 eingeklipst werden kann. Auf der Oberseite des Unterteils 12" sind Lager 44 angeformt oder angebracht, in die eine an der Unterseite der Schalterwippe 12' angeformte Schwenkachse eingeklipst werden kann.

Bei horizontaler Ausrichtung des aus zwei Einzelrahmen 24 bestehenden Rahmens an einer Wand sitzt im fertig montierten Zustand die Schalterwippe 12' zwischen über und unter ihr angeordneten Lichtstreuscheiben 46, die einstückig mit dem Unterteil 12' aus einem transluzenten Kunststoff geformt sind. Unterhalb der sich längs der Randleisten 22' erstreckenden Lichtstreuscheiben 46 sind am unteren Einsatz 42 ein oder mehrere Leuchtdioden 48 angeordnet, die zum Beispiel beim Einschalten einer von dem Schalter aus nicht sichtbaren Lichtquelle oder eines Elektrogeräts aufleuchten, so das die erhellten Lichtstreuscheiben 46 über und unter der Schaltung 12' den Betriebszustand des entsprechenden Verbrauchers anzeigen.

Das Unterteil 14' ist in gleicher Weise wie das Unterteil 12" mit Lichtstreuscheiben 46 geformt, so dass sich bei mehreren nebeneinander angeordneten Einzelrahmen 24 jeweils oberhalb und unterhalb der Funktionseinheiten ein sich über die gesamte Breite des Rahmens erstreckendes, bis an die Endstücke 28 reichendes Band von Lichtstreuscheiben 46 ergibt. Das Unterteil 14" bedarf keiner speziellen Befestigungsmittel, da es zwischen dem zugehörigen Einzelrahmen 24 und dem mit dem zugehörigen unteren Einsatz 50 zu verschraubenden Steckdoseneinsatz 14' eingespannt wird. Auch an dem unteren Einsatz 50 der Steckdosen sind Leuchtdioden 48 installiert, die einen bestimmten Betriebszustand bei ein- oder ausgeschaltetem Verbraucher über die Lichtstreuscheiben 46 anzeigen. Da diese gegenüber dem mittleren Bereich der Unterteile 12", 14" erhöht sind, so dass ihre Oberfläche mit den Oberflächen der Schalterwippe 12' und des Steckdoseneinsatzes 14' in einer gemeinsamen Ebene liegt, können von den Unterteilen 12", 14" auch die durch die Abwinkelung erhöhten, hakenförmigen Enden 34 der Zwischenstücke 26' überdeckt werden, weil sich diese unter den Lichtstreuscheiben befinden.

Es versteht sich, dass das Ausführungsbeispiel nach Fig. 11 bis 14 auch mit einteiligen äußeren Einsätzen, wie bei der Ausführung nach Fig. 1 bis 10, realisiert werden könnte.

Die gezeigten Ausführungsbeispiele verdeutlichen, daß mit einer einzigen Form des Einzelrahmens 24 in Verbindung mit einer einzigen form von Zwischenstücken 26 sowie einer einzigen Form von Endstücken 28 Rahmen für eine beliebige Zahl von im genormten Abstand nebeneinander angeordneten Steckdosen, Schaltern u. dgl. hergestellt werden können, so daß die Werkzeugkosten für Spritzgußformen minimiert werden können. Die niedrigen Werkzeugkosten wiederum erlauben ein breiteres Angebot im Prinzip gleich aufgebauter, aber unterschiedlich geformter Rahmen mit äußeren Einsätzen. Allen gemeinsam ist die feste Verbindung der Einzelrahmen 24 unmittelbar miteinander.

## Patentansprüche

1. Rahmen für eine Mehrzahl von senkrecht oder waagerecht nebeneinander angeordneten äußeren Einsätzen (12, 12';14, 14'), wie elektrischen Schaltern (12, 12') und/oder Steckdosen (14, 14'), die mit in Wanddosen installierten, jeweils mit einem Installationsblech verbundenen, inneren elektrischen Einsätzen (42, 50) mechanisch zu verbinden sind, wobei ein bestimmter Mittenabstand der äußeren Einsätze (12, 12'; 14, 14') durch die auf Anschlag montierten Wanddosen und/oder Installationsbleche vorgegeben ist und der Rahmen (10) aus zwei oder mehr Einzelrahmen (24) sowie mindestens einem mit diesen formschlüssig in Eingriff zu bringenden Zwischenstück (26, 26') und Endstücken (28) zusammensetzbar ist und wobei die Einzelrahmen (24) zur gegenseitigen Verbindung an gegenüberliegenden Randkanten mit formschlüssig in Eingriff zu bringenden Einbuchtungen (30) und Vorsprüngen (32) ausgebildet sind, die auf die endseitigen Randkanten aufsetzbaren Endstücke (28) die endseitigen Einbuchtungen (30) und Vorsprünge (32) abdecken und durch die auf aneinander grenzende Randbereiche benachbarter Einzelrahmen (24) aufsetzbaren Zwischenstücke (26, 26') die in Eingriff gebrachten Einbuchtungen (30) und Vorsprünge (32) in der Eingriffsstellung verriegelbar sind, **dadurch gekennzeichnet, dass** die Einbuchtungen (30) und Vorsprünge (32) durch Relativbewegung der Einzelrahmen (24) normal zu ihrer rückseitigen, an einer Wand anzulegenden Anlagefläche (25) in Eingriff zu bringen sind und die Zwischenstücke (26, 26') von der Frontseite aus derart auf die aneinander grenzenden Randbereiche benachbarter Einzelrahmen (24) aufzuklipsen sind, dass sie im montierten Zustand mit dem mittleren Bereich ihrer Länge an der Vorderseite und mit ihren Enden (34) an der Rückseite der Einzelrahmen (24) anliegen.

2. Rahmen nach Anspruch 1, **dadurch gekennzeichnet, dass** die Einbuchtungen (30) und Vorsprünge (32) an gegenüberliegenden Randkanten der Einzelrahmen (24) derart komplementär ausgebildet sind, dass in der Eingriffsstellung zwischen zwei Einzelrahmen (24) nur eine Passungsfuge zwischen den passend geformten Einbuchtungen (30) und Vorsprüngen (32) vorhanden ist.

3. Rahmen nach Anspruch 1, **dadurch gekennzeichnet, dass** die Einbuchtungen (30) größer als die Vorsprünge (32) und beide derart geformt sind, dass sie durch translatorische Bewegungen zweier zu verbindender Einzelrahmen (24) parallel zu der an einer Wand anzulegenden Anlagefläche (25) in Richtung zueinander hin und quer dazu in Eingriff gelangen, und dass die beiden Einzelrahmen (24) durch ein auf sie aufgesetztes Zwischenstück (26) gegen Relativbewegung in Querrichtung verriegelbar sind.

4. Rahmen nach Anspruch 1 bis 3, **dadurch gekennzeichnet, dass** die Einzelrahmen (24) beidseitig zwischen den mit Einbuchtungen (30) und Vorsprüngen (32) versehenen Randbereichen mit Randleisten (22) geformt sind, deren Rückseite die an die Wand anzulegende Anlagefläche (25) bildet und deren Vorderseite über eine Bodenfläche (18) der Einzelrahmen (24) übersteht, und dass die Oberfläche der die in Eingriff gebrachten Einbuchtungen (30) und Vorsprünge (32) abdeckenden Zwischenstücke (26) im montierten Zustand bündig an die Oberflächen der angrenzenden Randleisten (22) anschließt.

5. Rahmen nach Anspruch 4, **dadurch gekennzeichnet, dass** die Einzelrahmen (24) neben den mit Einbuchtungen (30) und Vorsprüngen (32) versehenen Randbereichen vorderseitig mit Stegen (23) geformt sind, auf denen im montierten Zustand die Zwischenstücke (26) aufliegen.

6. Rahmen nach Anspruch 4 oder 5 mit zugehörigen Einsätzen (14), **dadurch gekennzeichnet, dass** im montierten Zustand die Oberflächen der Einsätze (14) bündig sowohl an die Oberflächen der Randleisten (22) der Einzelrahmen (24) als auch an die Oberflächen der Zwischenstücke (26) anschließt.

7. Rahmen nach einem der Ansprüche 1 bis 3, **dadurch gekennzeichnet, dass** die Einzelrahmen (24) an den nicht mit Einbuchtungen (30) und Vorsprüngen (32) versehenen Rändern mit Randleisten (22') geformt sind, deren Rückseite die an die Wand anzulegende Anlagefläche (25) bildet, und deren Vorderseite über eine Bodenfläche (18) der Einzelrahmen (24) und über die Zwischenstücke (26'), die zwischen den gegenüberliegenden Randleisten (22') angeordnet sind, übersteht.

8. Rahmen nach Anspruch 7 mit zugehörigen äußeren Einsätzen, **dadurch gekennzeichnet, dass** die äußeren Einsätze aus einem Abdeckteil (12", 14") und einem Funktionsteil (12', 14') bestehen, das in eine Aussparung des Abdeckteils (12", 14") einsetzbar ist, wobei eines der beiden Teile (12', 12"; 14', 14") am inneren Einsatz (42, 50) oder dem zugehörigen Einzelrahmen (24) befestigbar ist und den jeweils anderen Teil hält.

9. Rahmen nach Anspruch 8 mit zugehörigen äußeren Einsätzen, **dadurch gekennzeichnet, dass** das Abdeckteil (12", 14") oder das Funktionsteil (12', 14') aus einem transluzenten Kunststoff besteht und wenigstens eine am inneren Einsatz (42, 50) angebrachte Leuchtdiode (48) überdeckt.

## Claims

1. Frame for a plurality of external inserts (12, 12'; 14, 14'), arranged side by side in a vertical or horizontal direction, such as electrical switches (12, 12') and/or sockets (14, 14') which are to be mechanically connected to internal electrical inserts (42, 50) which are each connected to an installation sheet, a specific centre-to-centre distance of the external inserts (12, 12'; 14, 14') being provided by the wall boxes and/or installation sheets mounted on a stop, and the frame (10) being able to be assembled from two or more individual frames (24) and at least one intermediate piece (26, 26'), which is to be brought into positive engagement therewith, and end pieces (28), and the individual frames (24) being formed for mutual connection, at opposing marginal edges, to recesses (30) and projections (32) which are to be brought into positive engagement and which cover the end recesses (30) and projections (32) on the end pieces (28) which can be placed on the end marginal edges, and the recesses (30) and projections (32) which have been brought into engagement can be locked in the engagement position by intermediate pieces (26, 26') which can be placed on edge regions, which border one another, of adjacent individual frames (24), **characterised in that** the recesses (30) and projections (32) are to be brought into engagement by a relative movement of the individual frames (24) perpendicular to their rear contact surface (25) which is to rest on a wall, and the intermediate pieces (26, 26') are to be clipped, from the front, to the edge regions, which border one another, of adjacent individual frames (24) in such a way that, when mounted, they rest with the central region of their length on the front and with their ends (34) on the back of the individual frames (24).

2. Frame according to claim 1, **characterised in that** the recesses (30) and projections (32) on opposing marginal edges of the individual frames (24) are formed so as to be complementary in such a way that, in the engagement position between two individual frames (24), only one fit joint is provided between the matching recesses (30) and projections (32).

3. Frame according to claim 1, **characterised in that** the recesses (30) are larger than the projections (32) and both are formed in such a way that they engage by means of translatory movements of two individual frames (24) to be connected, parallel to the contact surface (25) which is to rest on a wall, in a direction towards each other and transverse thereto, and **in that** the two individual frames (24) can be locked in the transverse direction against relative movement by an intermediate piece (26) which is placed thereon.

4. Frame according to claims 1 to 3, **characterised in that** the individual frames (24) are formed having shoulders (22) on both sides between the edge regions provided with recesses (30) and projections (32), the back of which shoulder forms the contact surface (25) which is to rest on the wall, and the front of which shoulder projects beyond a bottom surface (18) of the individual frames (24), and **in that**, when mounted, the surface of the intermediate pieces (26) which covers recesses (30) and projections (32) which have been brought into engagement connects flush with the surfaces of the bordering shoulders (22).

5. Frame according to claim 4, **characterised in that** the individual frames (24) are formed having webs (23) on the front, adjacent to the edge regions provided with recesses (30) and projections (32), on which webs intermediate pieces (26) rest when mounted.

6. Frame according to either claim 4 or claim 5 comprising associated inserts (14), **characterised in that**, when mounted, the surfaces of the inserts (14) connect flush with both the surfaces of the shoulders (22) of the individual frames (24) and also the surfaces of the intermediate pieces (26).

7. Frame according to any of claims 1 to 3, **characterised in that** the individual frames (24) are formed having shoulders (22') on the edges which are not provided with recesses (30) and projections (32), the back of which shoulder forms the contact surface (25) which is to rest on the wall, and the front of which shoulder projects beyond a bottom surface (18) of the individual frames (24) and beyond the intermediate pieces (26') which are arranged between the opposing shoulders (22').

8. Frame according to claim 7 comprising associated external inserts, **characterised in that** the external inserts consist of a cover part (12", 14") and a functional part (12', 14'), which can be inserted into a relief in the cover part (12", 14"), one of the two parts (12', 12"; 14', 14") being able to be attached to the internal insert (42, 50) or to the associated individual frame (24) and holding the respective other part.

9. Frame according to claim 8 comprising associated external inserts, **characterised in that** the cover part (12", 14") or the functional part (12', 14') consists of a translucent plastics material and covers at least one light emitting diode (48) attached to the internal insert (42, 50).

## Revendications

1. Cadre pour un ensemble de pièces externes (12, 12', 14, 14') montées cote à cote perpendiculairement ou horizontalement tels que des commutateurs électriques (12, 12') ou des prises de courant (14, 14') qui doivent être reliées mécaniquement à des pièces électriques internes (42, 50) montées dans des boitiers encastrés et respectivement reliées à une tôle de montage, une distance médiane déterminée des pièces externes (12, 12', 14, 14') étant prédéfinie par les boitiers encastrés et/ou les tôles de montage montés sur une butée, et le cadre (10) étant constitué de deux ou d'un plus grand nombre de cadres individuels (24), d'au moins une pièce intermédiaire (26, 26') destinée à venir en prise par une liaison par la forme avec ces cadres individuels ainsi que de pièces d'extrémité (28), et, les cadres individuels (24) étant équipés, pour permettre leur liaison respective sur des bords situées en regard d'évidements (30) et des saillies (32) destinés à venir en prise par une liaison par la forme, les pièces d'extrémité (28) pouvant être montées sur les bords d'extrémité recouvrant les évidements (30) et les saillies (32) d'extrémité et les évidements (30) et les saillies (32) une fois mis en prise pouvant être bloqués dans la position de mise en prise par les pièces intermédiaires (26, 26') pouvant être montées sur des zones de bord limitrophes de cadres individuels (24) voisins,
**caractérisé en ce que**
les évidements (30) et les saillies (32) peuvent être mis en prise par un mouvement relatif des cadres individuels (24) perpendiculaire à leur surface d'appui arrière (25) à appliquer contre une paroi, et les pièces intermédiaire (26, 26') sont destinées à être encliquetées à partir de leur face frontale, sur les zones de bord limitrophes de cadres individuels voisins de sorte qu'elles s'appliquent à l'état monté, par la zone médiane de leur longueur contre la face avant des cadres individuels (24) et par leurs extrémités (34) contre la face arrière de ces cadres individuels (24).

2. Cadre conforme à la revendication 1,
**caractérisé en ce que**
les évidements (30) et les saillies (32) sont réalisés sur les bords opposés des cadres individuels (24) de façon à se compléter pour qu'il n'y ait, dans la position de mise en prise, entre deux cadres unitaires (24) qu'un joint d'ajustement entre les évidements (30) et les saillies (32) formées de manière adaptées.

3. Cadre conforme à la revendication 1,
**caractérisé en ce que**
les évidements (30) sont plus grands que les saillies (32) et ces deux éléments sont formés de façon à venir en prise par des mouvements de translation de deux cadres individuels (24) à relier, parallèles à leur surface d'appui (25) devant être appliquée contre une paroi, en direction les uns des autres et transversalement à cette direction, et les deux cadres individuels (24) peuvent être bloqués vis-à-vis de mouvements relatifs en direction transversale par une pièce intermédiaire (26) montées sur ces cadres.

4. Cadre conforme à l'une des revendications 1 à 3,
**caractérisé en ce que**
les cadres indépendants (24) sont équipés de part et d'autre, entre les zones de bord munies des évidements (30) et des saillies (32) de barrettes de bord (22) dont la face arrière forme la surface d'appui (25) devant être appliquée contre la paroi et dont la face avant dépasse de la surface du fond (18) des cadres individuels (24), et la surface des pièces intermédiaires (26) recouvrant les évidements (30) et les saillies (32) mis en prise vient en alignement à l'état monté avec les surface des barrettes de bord limitrophes (22).

5. Cadre conforme à la revendication 4,
**caractérisés en ce que**
les cadres individuels (24) sont équipés, outre des zones de bord munies d'évidements (30) et de saillies (32), sur leur face avant de traverses (23) sur lesquelles s'appuient les pièces intermédiaires (26) à l'état monté.

6. Cadre conforme à la revendication 4 ou 5, comprenant des pièces (14),
**caractérisé en ce qu'**
à l'état monté, les surfaces des pièces (14) affleurent les surfaces des barrettes de bord (22) des cadres individuels (24) ainsi que les surfaces des pièces intermédiaires (26).

7. Cadre conforme l'une des revendications 1 à 3,
**caractérisé en ce que**
les cadres individuels (24) sont équipés, sur leurs bords non munis d'évidements (30) et de saillies (32) de barrettes de bord (22') dont la face arrière forme la surface d'appui (25) devant être appliquée contre la paroi et dont la face avant dépasse de la surface du fond (18) des cadres individuels (24) et des pièces intermédiaires (26') qui sont situées entre les barrettes de bords (22') opposées.

8. Cadre conforme à la revendication 7, comprenant des pièces externes associées,
**caractérisé en ce que**
les pièces externes sont constituées d'un élément de recouvrement (12", 14") et d'un élément fonctionnel (12', 14') pouvant être monté dans un évidement de l'élément de recouvrement (12", 14"), l'un des deux éléments (12', 12", 14', 14") pouvant être fixé sur la pièce interne (42, 50) ou le cadre individuel (24) associé et maintenant l'autre élément respectif.

9. Cadre conforme à la revendication 8, comprenant des pièces externes,
**caractérisé en ce que**
l'élément de recouvrement (12", 14") ou l'élément fonctionnel (12', 14') est réalisé en une matière plastique translucide et recouvre au moins une diode électroluminescente (48) montée sur la pièce interne (42, 50).
